# EUROPÄISCHE PATENTSCHRIFT

(11) **EP 3 794 198 B1**
(45) Veröffentlichungstag und Bekanntmachung des Hinweises auf die Patenterteilung: **04.05.2022**
(21) Anmeldenummer: 19721320.0
(22) Anmeldetag: 08.05.2019
(51) Int. Cl.: E06B 3/54

(54) **ISOLIERVERGLASUNGSEINHEIT**
INSULATING GLAZING UNIT
UNITÉ DE VITRAGE ISOLANT

(30) Priorität: 14.05.2018 EP 18172065
(43) Veröffentlichungstag der Anmeldung: 24.03.2021
(73) Patentinhaber: Saint-Gobain Glass France, 92400 Courbevoie (FR)
(72) Erfinder: HOLTSTIEGE, Thomas, 58332 Schwelm (DE); DRÖGE, Alicia, 52066 Aachen (DE); EFFERTZ, Christian, 52080 Aachen (DE); MARJAN, Christopher, 52072 Aachen (DE)
(74) Vertreter: Gebauer, Dieter Edmund
(86) Internationale Anmeldenummer: PCT/EP2019/061760
(87) Internationale Veröffentlichungsnummer: WO 2019/219462

(56) Entgegenhaltungen:
- WO-A1-2007/137719
- FR-A1- 2 787 135
- US-A1- 2011 133 940

## Beschreibung

Die Erfindung betrifft eine Isolierverglasungseinheit, die mindestens zwei Glasscheiben und einen zwischen diesen nahe deren Kanten umlaufendes Abstandshalterprofil aufweist, zur Verwendung in einem Fenster, einer Tür oder einer Fassadenverglasung, das/die jeweils einen die Kanten der Isolierverglasung umgreifenden Rahmen aufweist, wobei an der Isolierverglasungseinheit mindestens ein RFID-Transponder als Identifikationselement angebracht ist. Sie betrifft des Weiteren ein Fenster, eine Tür und eine Fassadenverglasung, die mit einer solchen Isolierverglasungseinheit gebildet sind.

Moderne Fenster, Türen und Fassadenverglasungen, zumindest für den Einsatz in nördlichen und gemäßigten Breiten, werden üblicherweise unter Einsatz vorgefertigter Isolierverglasungseinheiten hergestellt, die den oben erwähnten Aufbau haben, gegebenenfalls aber auch mehr als zwei Glasscheiben im Verbund umfassen können. Derartige Isolierverglasungseinheiten stellen massenhaft hergestellte, versandte und auch eigenständig gehandelte Produkte dar, die auf ihrem Weg bis in ein Endprodukt und gegebenenfalls auch noch bei dessen Wartung und Instandhaltung eindeutig identifizierbar sein sollten.

Es ist bereits bekannt, Isolierverglasungseinheiten mit derartigen identifizierenden Kennzeichnungen zu versehen, und in der entsprechenden Praxis haben sich gewisse Anforderungen der Hersteller und Anwender ergeben:
[1] Die identifizierende Markierung sollte sowohl von der Innen- als auch der Außenseite her unsichtbar sein.
[2] Die Kennzeichnung sollte aus einem Abstand zwischen 30 cm und 1 m "lesbar" sein.
[3] Die Kennzeichnung sollte weitestgehend fälschungssicher sein, also nicht ohne Weiteres überschrieben oder kopiert werden können.

Die Wirksamkeit herkömmlicher identifizierender Markierungen, wie etwa Barcodes und QR-Codes, basiert auf deren Sichtbarkeit, was für Isolierverglasungseinheiten zumindest eine Einschränkung unter obigem Aspekt [1] bedeutet. Auch die Erfüllung der Anforderung [2] gestaltet sich damit schwierig.

Es wurde auch vorgeschlagen, Isolierverglasungseinheiten mit "elektronischen" Kennzeichen, insbesondere über Funk auslesbaren Identifikatoren, sogenannten RFID (radio-frequency identification)-Transpondern, zu versehen. Derartige Isolierverglasungseinheiten sind beispielsweise offenbart in der WO 00/36261 A1 oder der WO 2007/137719 A1.

Bestimmte Typen von Fenster- und Türrahmen, insbesondere aber Fassadenkonstruktionen, in denen Isolierverglasungseinheiten verbaut werden, bestehen vollständig oder mindestens teilweise aus einem Metall (Aluminium, Stahl ...), welches den Durchgang von Funkwellen vom oder zum RFID-Transponder an der Isolierverglasungseinheit unterbricht oder zumindest stark dämpft. Aus diesem Grund hat sich insbesondere die Erfüllung der obigen Anforderung [2] als schwierig erwiesen. Bekannte mit RFID-Transpondern versehene Isolierverglasungseinheiten sind daher nicht ohne Weiteres bei metallischen Rahmenkonstruktionen einzusetzen. Das verringert den potentiellen Einsatzbereich der so gekennzeichneten Verglasungseinheiten und somit die Akzeptanz der entsprechenden Markierungslösungen bei den Herstellern und Anwendern.

Der Erfindung liegt daher die Aufgabe zugrunde, eine verbesserte Isolierverglasungseinheit der oben genannten Art bereitzustellen, die insbesondere unproblematisch auch in Rahmenkonstruktionen einsetzbar ist, die zumindest zu einem erheblichen Teil aus einem Metall bestehen, und die auch bei solchen Einbausituationen die Erfüllung der o. g. Anforderungen gewährleistet.

Diese Aufgabe wird durch eine Isolierverglasungseinheit mit den Merkmalen des Anspruchs 1 gelöst, also dadurch, dass der oder mindestens ein Transponder auf einer äußeren Oberfläche einer der Glasscheiben an deren Kante oder auf der Begrenzungskante einer Glasscheibe derart positioniert ist, dass er im montierten Zustand des Fensters, der Tür oder der Fassadenverglasung im umgreifenden, insbesondere metallischen, Rahmen liegt. Zweckmäßige Fortbildungen des Erfindungsgedankens sind Gegenstand der abhängigen Ansprüche.

Die Erfindung ist im Ergebnis von umfangreichen experimentellen Untersuchungen entstanden, die an Isolierverglasungseinheiten mit dem oben erwähnten grundsätzlichen Aufbau unternommen wurden, bei dem insbesondere der Abstandshalter ein mit einem Trocknungsmittel gefülltes Hohlprofil ist, das aus Metall besteht oder wenigstens abschnittsweise mit einer Metallfolie beschichtet ist, und bei dem auf der scheibenäußeren Oberfläche des Abstandhalterprofils ein (ebenfalls umlaufender) Dichtmittelstreifen aufgebracht ist. Was die Anwendungssituation anbelangt, haben die Erfinder insbesondere Untersuchungen an in metallische Rahmen eingebetteten Isolierverglasungseinheiten angestellt, bei denen auf dem Falzgrund des Rahmens voneinander beabstandete Distanzstücke liegen und zwischen den Außenseiten der Glasscheiben und den Innenseiten der benachbarten aufstehenden Rahmenfalze Elastomer-Dichtstreifen angeordnet sind. Bei den Untersuchungen wurden handelsübliche RFID-Transponder eingesetzt, deren Aufbau und Funktionsweise hinlänglich bekannt ist und daher hier nicht weiter beschrieben werden muss. Die bei solchen Transpondersystemen genutzten Funkwellenlängen liegen üblicherweise im Bereich zwischen 125 kHz und 960 MHz (selten zwischen 2,45 GHz und 5,8 GHz) und durchdringen sowohl Holz als auch herkömmliche Kunststoffe, nicht aber Metalle. Die Erkenntnisse der Erfinder gelten grundsätzlich sowohl für passive als auch für aktive RFID-Transponder.

Im Hinblick auf Metallrahmen, die eine Isolierverglasungseinheit umgreifen, und die aufgrund elementarer physikalischer Gesetzmäßigkeiten und gemäß der darauf basierenden Kenntnis des Fachmanns die HF-Strahlung von randnah angebrachten RFID-Transpondern oder deren Antennen empfindlich stören, wenn nicht völlig unterbinden sollten, ist die vorgeschlagene Lösung überraschend. Sie erbringt den unvorhergesehenen Vorteil, dass ein erfindungsgemäß platzierter RFID-Transponder in einem relativ großen Abstand von 0,5-1 m von einem Fenster, einer Tür oder einer Fassadenverglasung, in die die Isolierverglasungseinheit eingebaut ist, noch problemlos und zuverlässig auslesbar ist.

In zweckmäßigen Ausführungen der Erfindung ist zumindest ein Transponder an einer Ecke der Isolierverglasungseinheit platziert. In einer Ausgestaltung ist er an einer vorbestimmten Ecke angeordnet, die aufgrund einer vorbestimmten Einbaulage der Isolierverglasungseinheit in dem Rahmen festgelegt ist. Diese Ausführung ermöglicht es, eine eingebaute Isolierverglasungseinheit schnell zu identifizieren, ohne sämtliche Ecken daraufhin absuchen zu müssen, ob der die Identifikation liefernde Transporter dort oder anderswo platziert ist. Zudem wirkt die Ecke verstärkend für das Signal, sodass das Signal auch aus größeren Distanzen ausgelesen werden kann im Vergleich zu anders positionierten Transpondern.

Eine Anordnung eines Transponders "an einer Ecke" der Isolierverglasungseinheit bedeutet, dass das zur nächstliegenden Ecke der Isolierverglasungseinheit hinweisende Ende des Transponders nicht mehr als 30 cm, bevorzugt nicht mehr als 20 cm, besonders bevorzugt nicht mehr als 10 cm, ganz besonders bevorzugt nicht mehr als 5 cm von dieser Ecke der Isolierverglasungseinheit entfernt ist.

In einer weiteren Ausführung ist vorgesehen, dass an jeder Ecke der Isolierverglasungseinheit ein Transponder angeordnet ist. Diese Ausführung ist in der Herstellung etwas aufwändiger als die vorgenannte, ermöglicht dafür eine schnelle Identifikation jeder entsprechend ausgestatteten Isolierverglasungseinheit unabhängig davon, ob Festlegungen zu einer vorgeschriebenen Einbaulage getroffen wurden und diese auch tatsächlich eingehalten werden.

Speziell in Kombination mit der vorgenannten Ausführung ist eine weitere Ausführung vorteilhaft, bei der der RFID-Transponder elektromagnetisch oder elektrisch mit einem leitfähig ausgebildeten Abstandshalterprofil oder einem leitfähigen Abschnitt eines solchen gekoppelt oder verbunden ist, derart, dass die Abstrahl- und Empfangseigenschaften des gesamten Systems (Transponder-Isolierverglasungseinheit-Abstandshalterprofil-Rahmen) verbessert werden. In dieser Ausführungsform wirkt beispielsweise das leitfähig ausgebildete Abstandshalterprofil oder der leitfähige Abschnitt eines solchen als Antenne des Transponders.

In einer weiteren alternativen Ausführung ist der oder jeder Transponder auf eine äußere Oberfläche einer der Glasscheiben an deren Kante aufgebracht.

In ästhetisch besonders wünschenswerter Weise ist der Transponder derart bemessen und an der Kante platziert, dass er im montierten Zustand des Fensters, der Tür oder der Fassadenverglasung vollständig durch eine aufstehende Falzwand des umgreifenden, insbesondere metallischen, Rahmens abgedeckt ist.

In weiteren Ausführungen der Erfindung ist vorgesehen, dass am Ort des Transponders eine mit bloßem Auge sichtbare Hinweismarkierung auf mindestens eine äußere Glasscheibe aufgebracht ist.

In einer weiteren Ausführung ist die Isolierverglasungseinheit bereits mit Distanzstücken in erfindungsgemäßer Positionierung relativ zu dem oder den Transponder/n vorkonfektioniert.

Die Erfindung betrifft des Weiteren ein Fenster, eine Tür und eine Fassadenverglasung, die mit einer erfindungsgemäßen Isolierverglasungseinheit gebildet sind.

Vorteile und Zweckmäßigkeiten der Erfindung ergeben sich im Übrigen aus der nachfolgenden Beschreibung von Ausführungsbeispielen anhand der Figuren. Von diesen zeigen:
- Fig. 1: eine Detailansicht (Querschnittsdarstellung) eines Kantenbereiches eines Fensters, in dem eine Isolierverglasungseinheit gemäß einer Ausführungsform der Erfindung verbaut ist,
- Fig. 2: eine Detailansicht (Querschnittsdarstellung) eines Kantenbereiches eines Fensters, in dem eine nicht erfindungsgemäße Isolierverglasungseinheit verbaut ist,
- Fig. 3: eine Detailansicht (Querschnittsdarstellung) eines Kantenbereiches eines Fensters, in dem eine nicht erfindungsgemäße Isolierverglasungseinheit verbaut ist,
- Fig. 4: eine schematische Darstellung (Draufsicht) eines Abschnitts einer Fassadenverglasung, in der eine erfindungsgemäße Isolierverglasungseinheit eingebaut ist und
- Fig. 5: eine schematische Darstellung (Draufsicht/Schnitt) eines Abschnitts einer Fassadenverglasung, in der eine erfindungsgemäße Isolierverglasungseinheit eingebaut ist.

In den Figuren sowie der nachfolgenden Beschreibung sind die Isolierverglasungseinheiten wie auch das Fenster sowie die einzelnen Komponenten jeweils, unabhängig davon, dass sich die konkreten Ausführungen unterscheiden, mit den gleichen Bezugsziffern bezeichnet.

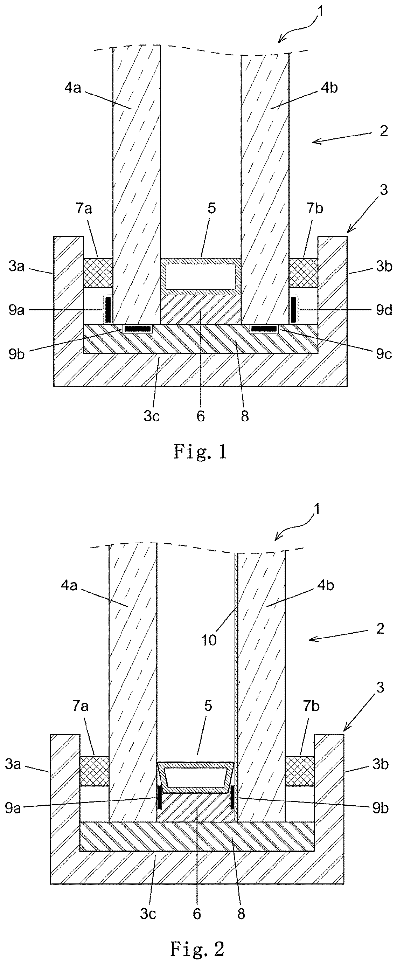

Fig. 1 zeigt einen Kantenbereich einer Isolierverglasungseinheit 1, eingesetzt in einen die Stirnseite der Isolierverglasungseinheit umgreifenden, im Querschnitt im Wesentlichen U-förmigen Metallrahmen 3 als Teile eines Isolierfensters 2.

Die Isolierverglasungseinheit 1 umfasst bei dieser Ausführung zwei Glasscheiben 4a und 4b, die durch ein nahe der Stirnfläche zwischen die Glasscheiben gesetztes Abstandshalterprofil 5 in einem vorbestimmten Abstand gehalten sind. Das Abstandshalterprofil 5 ist üblicherweise hohl und mit einem (nicht gezeigten) Trocknungsmittel befüllt, welches über innenseitige kleine Öffnungen (ebenfalls nicht gezeigt) etwaige in den Glaszwischenraum eingedrungene Feuchtigkeit an sich bindet. Der Glaszwischenraum zwischen den Glasscheiben 4a und 4b ist evakuiert oder mit einem Edelgas, etwa Argon, gefüllt. Im Randbereich der Isolierverglasungseinheit 1, zwischen den Glasschreiben 4a und 4b und außerhalb des Abstandshalterprofils 5, ist eine Elastomer-Versiegelung (Dichtprofil) 6 eingebracht.

Bei der in Fig. 1 gezeigten Ausführung ist auch der jeweilige Zwischenraum zwischen den beiden aufstehenden Falzwänden 3a, 3b des Rahmens 3 und der benachbarten Glasscheibe 4a bzw. 4b mit einem Elastomerprofil 7a bzw. 7b versiegelt. Im Falzgrund 3c des Rahmens 3 liegen an vorgegebenen Stellen der Längserstreckung des Rahmens Distanzstücke 8, die bevorzugt im Wesentlichen über die ganze Breite des Falzgrundes 3c reichen und somit die Stirnfläche der Isolierverglasungseinheit 1 vollständig punktuell abstützen. Derartige Distanzstücke sind üblicherweise aus einem zwar festen, aber nicht spröden bis zu einem gewissen Grade auch punktuell nachgiebigen Kunststoff gefertigt.

Die Isolierverglasungseinheit 1 nach Fig. 1 ist beispielhaft mit insgesamt vier RFID-Transpondern 9a bis 9d versehen. Hiervon sind die Transponder 9a und 9d an der Kante der Glasscheibe 4a bzw. 4b jeweils auf deren äußerer Oberfläche aufgebracht, während die Transponder 9b und 9c auf die Begrenzungskante der Glasscheiben 4a bzw. 4b aufgebracht sind. Diese beispielhafte Anordnung dient zur Verdeutlichung der Anbringungsmöglichkeiten der Transponder bei einer Isolierverglasungseinheit gemäß einer ersten Ausführungsform der Erfindung; in der Praxis werden normalerweise nur eine oder zwei der hier aufgezeigten möglichen Anbringungspositionen belegt sein. Bei Anbringung auf der Scheibenoberfläche kann der oder jeder Transponder auch etwas Abstand von der Kante haben.

Fig. 2 zeigt eine abgewandelte Konstruktion, bei der die Glasscheibe 4b eine innenseitige Beschichtung (etwa Wärmeschutzbeschichtung) 10 hat, die das Glas ganz oder nur teilweise bedecken kann.

Bei dieser Ausführung sind zwei Transponder 9a, 9b gezeigt, die jeweils auf den innenseitigen Oberflächen der Glasscheiben 4a bzw. 4b aufgebracht sind, und zwar im Grenzbereich zwischen dem Abstandshalterprofil 5 und dem die Isolierverglasungseinheit versiegelnden Dichtprofil 6. Da das Abstandshalterprofil 5 bei dieser Ausführung im Querschnitt trapezförmig, also zur Stirnkante der Isolierverglasungseinheit hin etwas verjüngt ist, ist dort ein kleiner Spalt zur benachbarten Glasoberfläche vorhanden, in den sich handelsübliche Transponder teilweise einschieben lassen. Auch hier wird in der Praxis normalerweise nur eine der beiden Anbringungspositionen mit einem Transponder belegt sein.

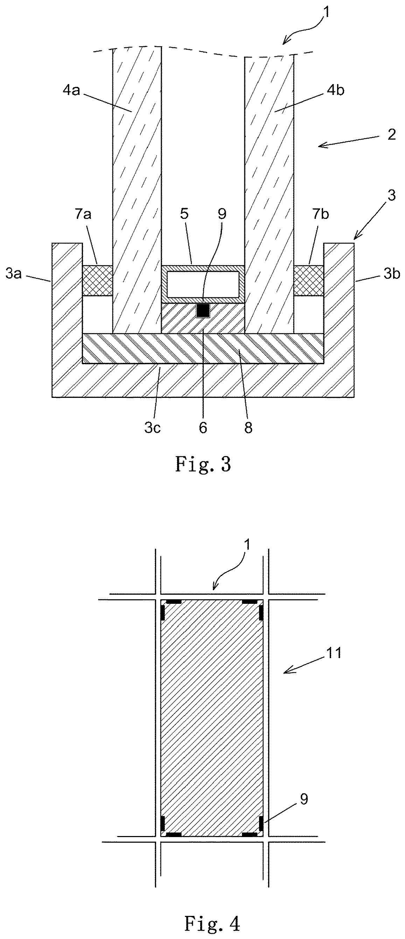

Fig. 3 zeigt eine geringfügige Abwandlung des in Fig. 2 dargestellten und oben beschriebenen Fensteraufbaus, deren einziger Unterschied im Vorsehen eines einzelnen RFID-Transponders 9 und dessen Positionierung mittig zwischen den Glasscheiben 4a und 4b an der äußeren Oberfläche des Abstandshalterprofils 5, eingebettet in die benachbarte Oberfläche des Dichtprofils 6, ist.

Fig. 4 zeigt schematisch, am Beispiel einer Fassadenverglasung 10, die Anbringung von Transpondern 9 in den Eckbereichen einer Isolierverglasungseinheit 1. Es hat sich bei Untersuchungen der Erfinder gezeigt, dass eine solche Anordnung die Empfangs-/Sendecharakteristik positiv beeinflusst und die erzielbare Auslesedistanz der Transponder vergrößert. Wie in der Figur gezeigt ist, können Transponder mit einem langgestreckten Gehäuse in Eckennähe sowohl an den langen als auch den kurzen Seiten der Isolierverglasungseinheit angebracht sein, und zwar grundsätzlich auf jede der in den Figuren 1 bis 3 gezeigten und oben beschriebenen Arten.

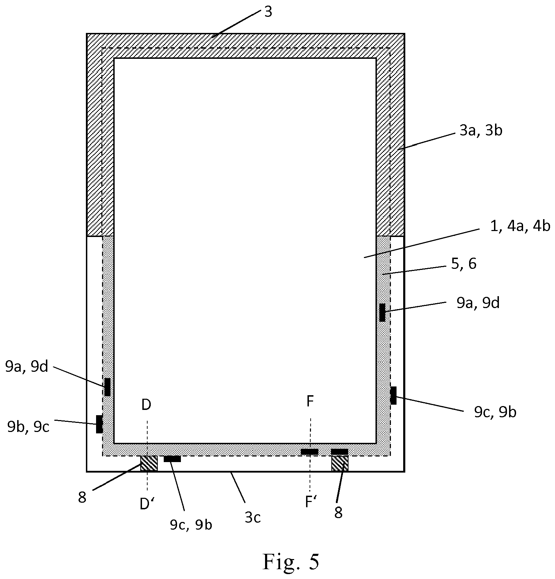

Fig. 5 zeigt schematisch eine Draufsicht auf eine Fassadenverglasung bzw. auf die darin verbaute Isolierverglasung. Im oberen Teil der Zeichnung ist der metallische Rahmen 3 sichtbar, sodass man in der Draufsicht auf eine der beiden aufstehenden Falzwände 3a oder 3b schaut. Im unteren Teil der Zeichnung ist der Rahmen aus Gründen der Darstellung nicht gezeigt, sodass die Anordnung der Isolierverglasungseinheit im Rahmen sichtbar ist. In der Zeichnung sind Distanzstücke 8 an einer kurzen Seite des Rahmens (unten) innerhalb des Rahmens positioniert. Diese Distanzstücke 8 liegen an vorgegebenen Stellen des Falzgrundes, um die Isolierverglasungseinheit im Rahmen punktuell abzustützen. Eine Anbringung von Distanzstücken ist entlang einer Seite (wie in der Zeichnung dargestellt), entlang zwei Seiten, drei Seiten oder allen vier Seiten je nach Bedarf möglich. Die in Figur 1 gezeigte Darstellung entspricht bis auf die Positionen der Transponder einem Querschnitt an einer Stelle mit Distanzstück, also einem Schnitt entlang der Linie D - D'. Ein Schnitt entlang der Linie F - F' ist in den Figuren 1 bis 3 nicht gezeigt, sähe aber entsprechend aus, wobei dann möglicherweise kein Distanzstück oder ein weiter hinten liegendes Distanzstück im Hintergrund zu sehen wäre.

In Figur 5 sind verschiedene Positionen für die RFID-Transponder 9a - 9d angegeben. Die RFID-Transponder 9b, 9c sind auf der Begrenzungskante einer Glasscheibe positioniert, wie auch in Figur 1 gezeigt. Die Begrenzungskante ist die umlaufende Seitenkante einer Glasscheibe. Bevorzugt ist der RFID-Transponder 9b, 9c dabei in einem Bereich angeordnet, in dem kein Distanzstück liegt, wie zum Beispiel zwischen zwei Distanzstücken. Ein zerdrücken oder zerquetschen zwischen Distanzstück und Isolierglaseinheit wird so verhindert. Alternativ ist auch eine Anordnung neben dem Distanzstück möglich. In dem Fall ist der Transponder durch das Distanzstück geschützt. Die RFID-Transponder liegen im metallischen Rahmen 3 und sind durch diesen verborgen.

Die RFID-Transponder 9a, 9d sind auf der äußeren Oberfläche einer der Glasscheiben 4a, 4b an deren Kante positioniert, wie auch in Figur 1 gezeigt. Die RFID-Transponder 9a, 9d sind demnach im Bereich des Randverbunds aus Abstandshalterprofil 5 und Dichtprofil 6 der Isolierverglasungseinheit auf den Glasscheiben angeordnet. Somit sind sie durch den metallischen Rahmen verborgen. Die RFID-Transponder können ganz oder teilweise über einem Distanzstück liegen (im Bereich der Linie D - D') oder neben bzw. zwischen den Distanzstücken angeordnet sein.

Die Ausführung der Erfindung ist nicht auf die oben beschriebenen Beispiele und hervorgehobenen Ausführungsaspekte beschränkt, sondern auch in einer Vielzahl von Abwandlungen möglich, die sich für den Fachmann aus den anhängenden Ansprüchen ergeben.

### Bezugszeichenliste

- 1: Isolierverglasungseinheit
- 2: Fenster
- 3: Rahmen
- 3a, 3b: aufstehende Falzwände
- 3c: Falzgrund
- 4a, 4b: Glasscheiben
- 5: Abstandshalterprofil
- 6: Dichtprofil der Isolierverglasungseinheit
- 7a, 7b: Elastomerprofil am Rahmen
- 8: Distanzstück
- 9, 9a-9d: RFID-Transponder
- 10: Fassadenverglasung

## Patentansprüche

1. Isolierverglasungseinheit (1), die mindestens zwei Glasscheiben (4a, 4b) und ein zwischen diesen nahe deren Kanten umlaufendes Abstandshalterprofil (5) aufweist, zur Verwendung in einem Fenster (2), einer Tür oder einer Fassadenverglasung (10), die jeweils einen die Kanten der Isolierverglasung mit aufstehenden Falzwänden (3a, 3b) umgreifenden, insbesondere metallischen, Rahmen (3) aufweist,
in den die Isolierverglasung unter Einsatz von Distanzstücken (8) eingesetzt ist, wobei an der Isolierverglasungseinheit mindestens ein RFID-Transponder (9, 9a-9d) als Identifikationselement angebracht ist,
**dadurch gekennzeichnet, dass**
der oder mindestens ein RFID-Transponder auf einer äußeren Oberfläche einer der Glasscheiben (4a, 4b) an deren Kante oder auf der Begrenzungskante einer Glasscheibe derart positioniert ist, dass er im montierten Zustand des Fensters, der Tür oder der Fassadenverglasung im umgreifenden, insbesondere metallischen, Rahmen (3) liegt.

2. Isolierverglasungseinheit nach Anspruch 1, wobei der oder der mindestens eine RFID-Transponder (9, 9a-9d) so angeordnet ist, dass er im montierten Zustand an einer Stelle liegt, an der kein Distanzstück (8) angeordnet ist.

3. Isolierverglasungseinheit nach Anspruch 1, wobei der oder der mindestens eine RFID-Transponder (9, 9a-9d) so positioniert ist, dass er im montierten Zustand ganz oder teilweise auf oder über einem Distanzstück (8) liegt.

4. Isolierverglasungseinheit nach einem der Ansprüche 1 bis 3, wobei der oder der mindestens eine RFID-Transponder (9, 9a-9d) so positioniert ist, dass er im montierten Zustand im Zwischenraum zwischen einem der Falzwände (3a, 3b) und der benachbarten Glasscheibe (4a, 4b) liegt.

5. Isolierverglasungseinheit nach einem der Ansprüche 1 bis 4, wobei der Zwischenraum zwischen den aufstehenden Falzwänden (3a, 3b) des Rahmens (3) und der jeweils benachbarten Glasscheibe (4a, 4b) mit einem Elastomerprofil (7a, 7b) versiegelt ist und der oder der mindestens eine RFID-Transponder (9, 9a-9d) in diesem versiegelten Zwischenraum angeordnet ist.

6. Isolierverglasungseinheit nach einem der Ansprüche 1 bis 5, wobei am Ort des RFID-Transponders (9, 9a-9d) eine mit bloßem Auge sichtbare Hinweismarkierung auf mindestens eine Glasscheibe (4a, 4b) aufgebracht ist.

7. Isolierverglasung nach einem der vorangehenden Ansprüche, wobei einer der RFID-Transponder (9, 9a-9d) elektromagnetisch oder elektrisch mit einem leitfähig ausgebildeten Abstandshalterprofil (5) oder einem leitfähigen Abschnitt eines solchen gekoppelt oder verbunden ist, derart, dass die Abstrahl- und Empfangseigenschaften des gesamten Systems (Transponder-Isolierverglasungseinheit-Abstandshalterprofil-Rahmen) verbessert werden.

8. Isolierverglasungseinheit nach einem der vorangehenden Ansprüche, wobei der RFID-Transponder (9, 9a-9d) derart bemessen und an der Kante platziert ist, dass er im montierten Zustand des Fensters (2), der Tür oder der Fassadenverglasung (10) vollständig durch eine aufstehende Falzwand (3a, 3b) des umgreifenden, insbesondere metallischen, Rahmens (3) abgedeckt ist.

9. Isolierverglasungseinheit nach einem der vorangehenden Ansprüche, mit auf mindestens eine Stirnfläche aufgeklebten Distanzstücken (8).

10. Isolierverglasungseinheit nach einem der vorhergehenden Ansprüche, wobei der oder mindestens ein RFID-Transponder (9, 9a-9d) an einer Ecke der Isolierverglasungseinheit (1) angeordnet ist.

11. Isolierverglasungseinheit nach einem der vorhergehenden Ansprüche, wobei der RFID-Transponder (9, 9a-9d) an einer vorbestimmten Ecke angeordnet ist, die aufgrund einer vorbestimmten Einbaulage der Isolierverglasungseinheit (1) in dem Rahmen (3) festgelegt ist.

12. Fenster (2) mit einem Rahmen (3) und einer in den Rahmen (3) eingesetzten Isolierverglasungseinheit (1) nach einem der Ansprüche 1 bis 11.

13. Tür mit einem Rahmen und einer in den Rahmen eingesetzten Isolierverglasungseinheit nach einem der Ansprüche 1 bis 11.

14. Fassadenverglasung (10) mit einer Konstruktion, die einen Rahmen und eine in den Rahmen eingesetzte Isolierverglasungseinheit (1) nach einem der Ansprüche 1 bis 11 aufweist.

## Claims

1. Insulating glazing unit (1) that has at least two glass panes (4a, 4b) and a circumferential spacer profile (5) between them near their edges, for use in a window (2), a door, or a façade glazing (10), which has in each case a frame (3), in particular metallic frame, surrounding the edges of the insulating glazing with upright rebate walls (3a, 3b), into which the insulating glazing is inserted using spacers (8), wherein at least one RFID transponder (9, 9a-9d) is attached to the insulating glazing unit as an identification element,
**characterized in that** the or at least one RFID transponder is positioned on an outer surface of one of the glass panes (4a, 4b) at its edge or on the boundary edge of a glass pane such that, in the installed state of the window, the door, or the façade glazing it is positioned in the surrounding, in particular metallic, frame (3).

2. Insulating glazing unit according to claim 1, wherein the or the at least one RFID transponder (9, 9a-9d) is arranged such that, in the installed state, it is positioned at a location at which no spacer (8) is arranged.

3. Insulating glazing unit according to claim 1, wherein the or the at least one RFID transponder (9, 9a-9d) is positioned such that, in the installed state, it is positioned completely or partially on or above a spacer (8).

4. Insulating glazing unit according to one of claims 1 through 3, wherein the or the at least one RFID transponder (9, 9a-9d) is positioned such that, in the installed state, it is positioned in the intermediate space between one of the rebate walls (3a, 3b) and the adjacent glass pane (4a, 4b).

5. Insulating glazing unit according to one of claims 1 through 4, wherein the intermediate space between the upright rebate walls (3a, 3b) of the frame (3) and the respective adjacent glass pane (4a, 4b) is sealed with an elastomer profile (7a, 7b) and the or the at least one RFID transponder (9, 9a-9d) is arranged in this sealed intermediate space.

6. Insulating glazing unit according to one of claims 1 through 5, wherein at the location of the RFID transponder (9, 9a-9d) an indicating mark visible to the naked eye is applied on at least one glass pane (4a, 4b).

7. Insulating glazing according to one of the preceding claims, wherein one of the RFID transponders (9, 9a-9d) is electromagnetically or electrically coupled or connected to a conductive spacer profile (5) or to a conductive section of a spacer profile such that the radiation and reception properties of the entire system (transponder - insulating glazing unit - spacer profile - frame) are improved.

8. Insulating glazing unit according to one of the preceding claims, wherein the RFID transponder (9, 9a-9d) is dimensioned and placed at the edge such that, in the installed state of the window (2), the door, or the façade glazing (10), it is completely covered by an upright rebate wall (3a, 3b) of the surrounding, in particular metallic, frame (3).

9. Insulating glazing unit according to one of the preceding claims, with spacers (8) glued onto at least one end face.

10. Insulating glazing unit according to one of the preceding claims, wherein the or at least one RFID transponder (9, 9a-9d) is arranged at a corner of the insulating glazing unit (1).

11. Insulating glazing unit according to one of the preceding claims, wherein the RFID transponder (9, 9a-9d) is arranged at a predetermined corner, which is specified based on a predetermined installation position of the insulating glazing unit (1) in the frame (3).

12. Window (2) with a frame (3) and an insulating glazing unit (1) according to one of claims 1 through 11 inserted into the frame (3).

13. Door with a frame and an insulating glazing unit according to one of claims 1 through 11 inserted into the frame.

14. Façade glazing (10) with a construction that has a frame and an insulating glazing unit (1) according to one of claims 1 through 11 inserted into the frame.

## Revendications

1. Unité de vitrage isolant (1) qui présente au moins deux vitres (4a, 4b) et un profilé d'écartement périphérique (5) entre elles à proximité de leurs bords, destiné à être utilisé dans une fenêtre (2), une porte ou un vitrage de façade (10), qui présente à chaque fois un cadre (3), en particulier un cadre métallique, entourant les bords du vitrage isolant avec des parois de feuillure verticales (3a, 3b), dans lesquelles le vitrage isolant est inséré à l'aide d'entretoises (8), au moins un transpondeur RFID (9, 9a-9d) étant fixé sur le vitrage isolant comme élément d'identification,
**caractérisé en ce que** le ou au moins un transpondeur RFID est positionné sur une surface extérieure de l'une des vitres (4a, 4b) au niveau de son bord ou sur le bord de délimitation d'une vitre de telle sorte que, dans l'état installé de la fenêtre, de la porte ou du vitrage de façade, il est positionné dans le cadre (3) environnant, en particulier métallique.

2. Unité de vitrage isolant selon la revendication 1, dans lequel le ou le au moins un transpondeur RFID (9, 9a-9d) est disposé de telle sorte que, à l'état installé, il est positionné à un endroit où aucun espaceur (8) n'est disposé.

3. Unité de vitrage isolant selon la revendication 1, dans laquelle le ou le au moins un transpondeur RFID (9, 9a-9d) est positionné de telle sorte que, à l'état installé, il est positionné complètement ou partiellement sur ou au-dessus d'une entretoise (8).

4. Unité de vitrage isolant selon l'une des revendications 1 à 3, dans lequel le ou le au moins un transpondeur RFID (9, 9a-9d) est positionné de telle sorte que, à l'état installé, il est positionné dans l'espace intermédiaire entre l'une des parois de la feuillure (3a, 3b) et la vitre adjacente (4a, 4b).

5. Unité de vitrage isolant selon l'une des revendications 1 à 4, dans lequel l'espace intermédiaire entre les parois de feuillure verticales (3a, 3b) du cadre (3) et la vitre adjacente respective (4a, 4b) est rendu étanche par un profilé élastomère (7a, 7b) et le ou l'au moins un transpondeur RFID (9, 9a-9d) est disposé dans cet espace intermédiaire étanche.

6. Unité de vitrage isolant selon l'une des revendications 1 à 5, dans lequel à l'emplacement du transpondeur RFID (9, 9a-9d), une marque indicatrice visible à l'œil nu est appliquée sur au moins une vitre (4a, 4b).

7. Unité de vitrage isolant selon l'une des revendications précédentes, dans lequel l'un des transpondeurs RFID (9, 9a-9d) est couplé ou connecté électromagnétiquement ou électriquement à un profilé intercalaire conducteur (5) ou à une section conductrice d'un profilé intercalaire de telle sorte que les propriétés de rayonnement et de réception de l'ensemble du système (transpondeur - vitrage isolant - profilé intercalaire - cadre) sont améliorées.

8. Unité de vitrage isolant selon l'une des revendications précédentes, dans lequel le transpondeur RFID (9, 9a-9d) est dimensionné et placé sur le bord de telle sorte que, à l'état monté de la fenêtre (2), de la porte ou du vitrage de façade (10), il est entièrement recouvert par une paroi de feuillure verticale (3a, 3b) du cadre (3) environnant, notamment métallique.

9. Unité de vitrage isolant selon l'une des revendications précédentes, avec des entretoises (8) collées sur au moins une face d'extrémité.

10. Unité de vitrage isolant selon l'une des revendications précédentes, dans laquelle le ou au moins un transpondeur RFID (9, 9a-9d) est disposé dans un coin de l'unité de vitrage isolant (1).

11. Unité de vitrage isolant selon l'une des revendications précédentes, dans laquelle le transpondeur RFID (9, 9a-9d) est disposé à un coin prédéterminé, qui est spécifié sur la base d'une position d'installation prédéterminée de l'unité de vitrage isolant (1) dans le cadre (3).

12. Fenêtre (2) avec un cadre (3) et une unité de vitrage isolant (1) selon l'une des revendications 1 à 11 insérée dans le cadre (3).

13. Porte avec un cadre et une unité de vitrage isolant selon l'une des revendications 1 à 11 inséré dans le cadre.

14. Vitrage de façade (10) dont la construction comporte un cadre et une unité de vitrage isolant (1) selon l'une des revendications 1 à 11 inséré dans le cadre.
